# EUROPÄISCHE PATENTSCHRIFT

(11) **EP 0 894 240 B1**
(45) Veröffentlichungstag und Bekanntmachung des Hinweises auf die Patenterteilung: **27.08.2003**
(21) Anmeldenummer: 97901575.7
(22) Anmeldetag: 22.01.1997
(51) Int. Cl.: G01B 11/27

(54) **ELEKTROOPTISCHES MESSGERÄT ZUM FESTSTELLEN DER RELATIVLAGE, DIE ZWEI KÖRPER ODER ZWEI OBERFLÄCHENBEREICHE VON KÖRPERN IN BEZUG AUFEINANDER EINNEHMEN**
ELECTRO-OPTICAL MEASURING DEVICE FOR DETERMINING THE RELATIVE POSITION OF TWO BODIES, OR OF TWO SURFACE AREAS OF BODIES, IN RELATION TO EACH OTHER
DISPOSITIF DE MESURE ELECTRO-OPTIQUE PERMETTANT DE DETERMINER LA POSITION RELATIVE DE DEUX CORPS L'UN PAR RAPPORT A L'AUTRE OU DE DEUX SURFACES DE CORPS L'UNE PAR RAPPORT A L'AUTRE

(43) Veröffentlichungstag der Anmeldung: 03.02.1999
(73) Patentinhaber: Prüftechnik Dieter Busch AG, 85737 Ismaning (DE)
(72) Erfinder: LYSEN, Heinrich, D-85748 Garching (DE); ASCHENBRENNER, Kai, D-85399 Goldach (DE); LETZE, Thomas, D-85764 Oberschlei heim (DE)
(86) Internationale Anmeldenummer: EP9700274
(87) Internationale Veröffentlichungsnummer: WO98033039

(56) Entgegenhaltungen:
- DE-A- 3 911 307
- US-A- 4 709 485
- HEINZ P. BLOCH: "Laser Optics accurately measure running Shaft Alignment" OIL & GAS JOURNAL, Bd. 88, Nr. 45, 5.November 1990, OKLAHOMA, US, Seiten 42-45, XP000200891
- P.EICKHOFF: "Einrichten mit dem Laser" LASER-PRAXIS, September 1993, MÜNCHEN, DE, Seiten LS89-LS90, XP000394218
- T. PFEIFER, M. LANG, J. THIEL: "Geradheitsmessgerät mit interner Strahllagekorrektur" TM TECHNISCHES MESSEN, Bd. 60, Nr. 5, Mai 1993, MÜNCHEN, DE, Seiten 192-197, XP000362411

## Beschreibung

Die Erfindung bezieht sich auf ein elektrooptisches Meßgerät zum Feststellen der Relativlage, die zwei Körper oder zwei Oberflächenbereiche von Körpern in Bezug aufeinander einnehmen.

Bekannte Geräte dieser Art sind mit einer Meßanordnung ausgerüstet, die mindestens einen Lichtstrahlsender und mindestens einen ein- oder mehrachsigen optoelektronischen Positionsdetektor aufweisen. Der Lichtstrahlsender dieser Meßanordnung richtet einen gebündelten Lichtstrahl geringer Divergenz, z.B. einen Laserstrahl, in bezüglich des einen Körpers bzw. Oberflächenbereichs fester Erstreckung direkt oder über eine zur Meßanordnung gehörende Spiegelanordnung auf die lichtempfindliche Meßfläche des Positionsdetektors, der sich bei direkter Bestrahlung vom Lichtsender her an dem anderen Körper und bei Reflexion von der an dem anderen körper befestigten Spiegelanordnung her auf dem selben Körper wie der Lichtstrahlsender befindet. Der Positionsdetektor liefert den Koordinaten des augenblicklichen Lichtstrahlauftreffpunktes auf der Meßfläche entsprechende elektrische Signale, und die Meßanordnung oder Teile von dieser sind so gestaltet, daß sie in einer definierten Meßbewegung mit dem oder an dem einen und/oder anderen Körper bzw. Oberflächenbereich derart verlagerbar ist/sind, daß der sich im Verlaufe der Meßbewegung ergebende geometriche Ort der Lichtstrahlauftreffpunkte auf der Meßfläche in einer vorbestimmten Beziehung zu der festzustellenden Relativlage der Körper bzw. Oberflächenbereiche steht. Das Meßgerät kann daher auf der Grundlage der unter der Meßbewegung gelieferten elektrischen Signale programmgesteuert die festzustellende Relativlage errechnen. Elektrooptische Meßgeräte dieser bekannten Gattung offenbaren u.a. die EP 0 474 799 B1 und die DE 39 11 307 A1 der Anmelderin.

Die gattungsgemäßen Meßgeräte nach den vorgenannten druckschriftlichen Vorveröffentlichungen werden dafür eingesetzt, den Fluchtungszustand von Wellen, z. B. miteinander zukuppelnden Wellen zweier Rotationsmaschinen, beispielsweise eines Motors und eines von diesem angetriebenen elektrischen Generators, festzustellen, damit bei einer eine vorbestimmte zulässige Größe überschreitenden Abweichung vom idealen Fluchtungszustand Lagekorrekturen vorgenommen werden können, bevor z.B. die Wellenlager und/oder die Wellenkupplung durch die Fehlausrichtung bedingte Schäden erleiden.

Wenn der Fluchtungsfehler sehr groß ist, kann es beim Arbeiten mit den bekannten Meßgeräten vorkommen, daß der Laserstrahl nur über Teilbereiche der Meßbewegung auf die eine vorgegebene Größe aufweisende Meßfläche des Positionsdetektors auftrifft. Bisher wurde in solchen Fällen so vorgegangen, daß in Anlehnung an die unvollständig gewonnenen Meßsignale zunächst mehr oder minder nach Augenmaß eine oder mehrere Vorkorrekturen der Relativposition der Wellen so lange vorgenommen wurden, bis der bestehende Fluchtungsfehler auf ein Maß verkleinert war, bei welchem der Lichtstrahlauftreffpunkt im Zuge der folgenden Meßbewegungen jeweils über die vollständige Meßbewegung hinweg auf der Meßfläche des Positionsdetektors verblieb, so daß von da an gezielt genaue Korrekturen vorgenommen werden konnten.

Zu vergleichbaren Situationen kann es auch bei anderen gattungsgemäßen Meßgeräten kommen, mit denen z.B. die Gestalt einer zu vermessenden Oberfläche bezüglich einer von dem Licht- bzw. Laserstrahl aufgespannten Ebene vermessen wird.

Der Erfindung liegt die Aufgabe zugrunde, ein Meßgerät der eingangs genannten bekannten Gattung zu schaffen, das es erlaubt, den Beginn und das Ende einer notwendigen Meßbereichserweiterung, d.h. Verlagerung der Detektor-Meßfläche und des Lichtstrahls in Bezug aufeinander in solcher Weise, daß der Lichtstrahlauftreffpunkt über einen folgenden Teil der Meßbewegung auf der Meßfläche des Positionsdetektors verbleibt, ohne aktiven Benutzereingriff am Meßgerät (z.B. Tastendruck) zu erkennen und den Benutzer durch diese Erweiterung zu führen.

Die vorstehende Aufgabe wird durch die im Patentanspruch 1 genannten Merkmale gelöst.

Bei dem erfindungsgemäßen Meßgerät wird davon ausgegangen, daß aus den zur Verfügung stehenden Meßgrößen bei Beobachtung der Meßbewegung die Möglichkeit gegeben ist, die Unterscheidungskriterien zwischen dem eigentlichen Meßvorgang und der Erweiterung des Meßbereichs zu gewinnen.

Die abhängigen Ansprüche haben bevorzugte Ausgestaltungen des Meßgeräts gemäß Patentanspruch 1 zum Gegenstand.

Die Erfindung wird nachstehend anhand der Zeichnung an Ausführungsbeispielen näher erläutert. In der Zeichnung zeigt:
- Fig. 1 bis Fig. 3: drei bekannte Ausführungen von Meßgeräten in Anwendung zum Feststellen des Fluchtungszustandes zweier hintereinander angeordneter, miteinander zu kuppelnder Wellen, jeweils in schematischer Darstellung in Seitenansicht,

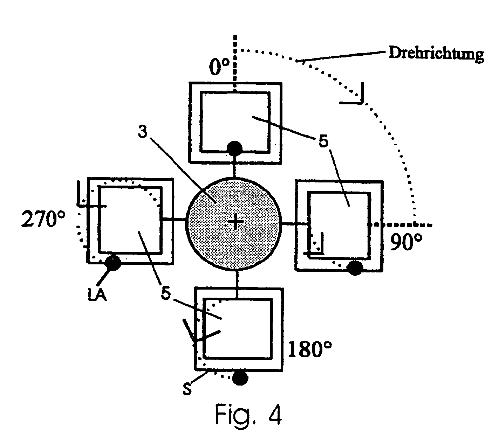

- Fig. 4: in schematischer Darstellung mit Blickrichtung parallel zum Laserstrahl die Meßfläche des an der einen Welle in einer vorgegebenen Relativposition zu dieser befestigten Positionsdetektors in sich um jeweils 90° unterscheidenden Winkelpositionen, die die Meßfläche im Zuge der Meßbewegung durchläuft, und die Spur, die der Durchstoßpunkt des Laserstrahls durch die die Meßfläche des Positionsdetektors beinhaltende Ebene bei einer vollständigen, aus einer Drehung der Wellen um 270° resultierden Meßbewegung beschreibt, wenn die Fehlausrichtung der Wellen so groß ist, daß der Durchstoßpunkt des Laserstrahls die Meßfläche des in seiner ursprünglichen Relativposition zu der Welle verbleibenden Positionsdetektors verläßt,
- Fig. 5: in schematischer Darstellung mit Blickrichtung parallel zum Laserstrahl die Meßfläche des an der einen Welle in einer vorgegebenen Relativposition zu dieser befestigten Positionsdetektors und die Spur, die der Lichtstrahlauftreffpunkt auf der Meßfläche beschreibt, wenn die Fehlausrichtung der Wellen so klein ist, daß er im Verlaufe der vollständigen Meßbewegung die Meßfläche des in seiner ursprünglichen Relativpostion zur Welle verbleibenden Positionsdetektors nicht verläßt,
- Fig. 6: in schematischer Darstellung die Meßfläche des Positionsdetektors, die Laserbahn und die Spur des Lichtstrahlauftreffpunktes auf der Meßfläche vor und nach einer normalen Erweiterung durch Verlagern de Positionsdetektors bezüglich der Welle,
- Fig.7: in schematischer Darstellung die Meßfläche des Positionsdetektors, die Laserbahn und die Spur des Lichtstrahlauftreffpunktes auf der Meßfläche vor und nach einer optimierten Erweiterung durch Verlagern des Positionsdetektors bezüglich der Welle,
- Fig.8: in schematischer Darstellung mit Blickrichtung parallel zum Laserstrahl die Laserbahn und die sich nach Durchführung von Erweiterungen im Verlaufe der Meßbewegung ergebenden Positionen der Meßfläche des Detektors in Fig. 8 links oben bei Erweiterung ohne Optimierung und in Fig. 8 rechts unten bei Erweiterung mit Optimierung,
- Fig.9: in schematischer Darstellung die Meßfläche des Positionsdetektors, die Laserbahn und die Spur des Lichtstrahlauftreffpunktes auf der Meßfläche vor und nach einer normalen Erweiterung durch Verlagern des Laserstrahls aus seiner bisherigen Lage in eine neue Lage bezüglich der Meßfläche des Positionsdetektors,
- Fig.10: in schematischer Darstellung die Meßfläche des Positionsdetektors, die Laserbahn und die Spur des Lichtstrahlauftreffpunktes auf der Meßfläche vor und nach einer optimierten Erweiterung durch Verlagern des Laserstrahls aus seiner bisherigen Lage in eine neue Lage bezüglich der Meßfläche des Positionsdetektors,
- Fig.11: in schematischer, perspektivischer Darstellung die Vermessung des Höhenprofils einer Fläche mit Laserstrahl und Positionsdetektor, und
- Fig.12: die Vermessung gemäß Fig. 8 unter Durchführung einer Meßbereichserweiterung.

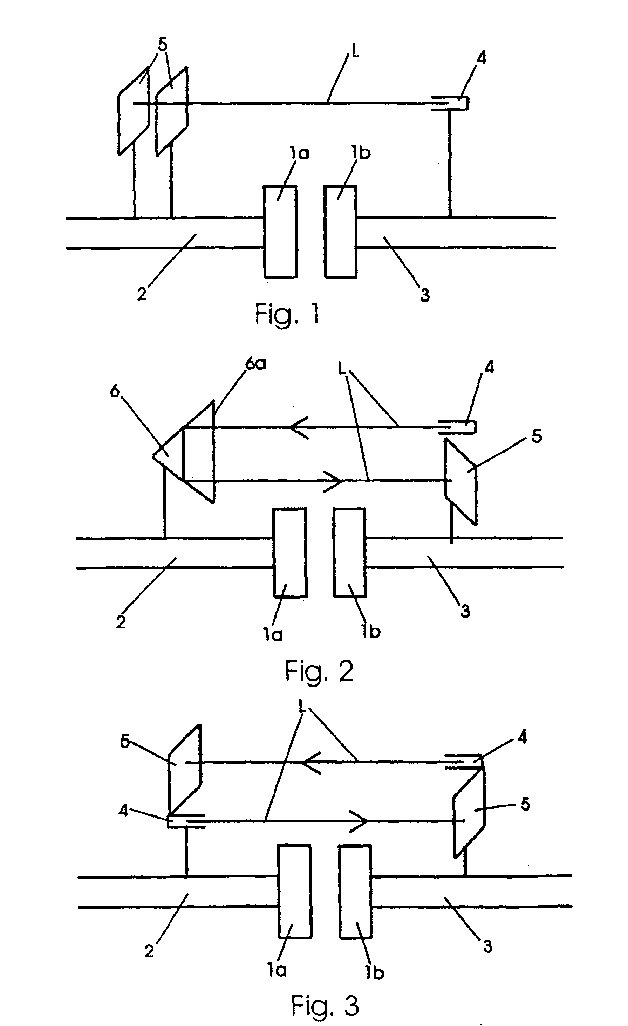

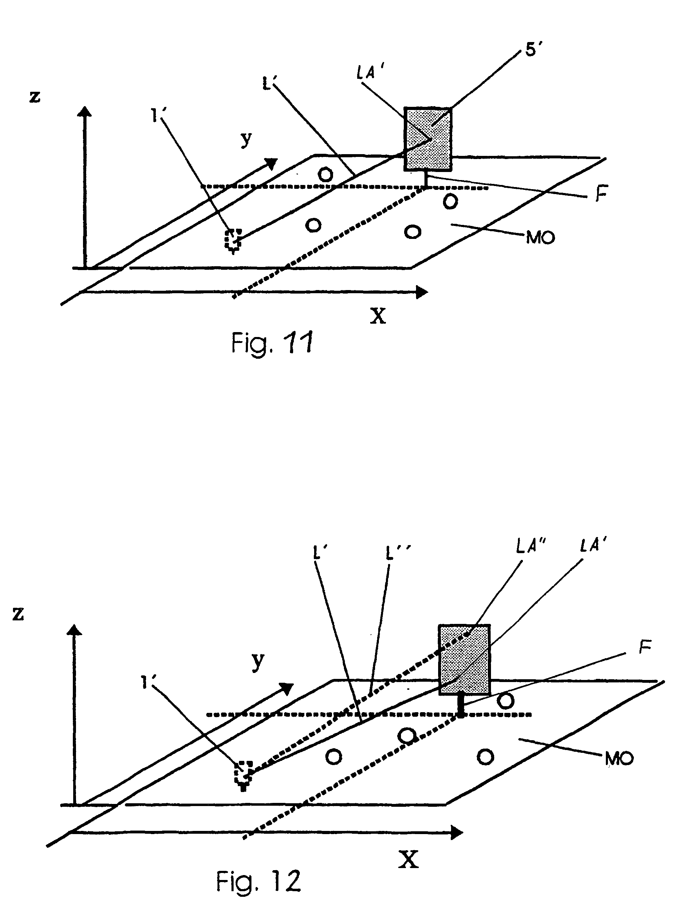

Nachstehend ist das erfindungsgemäße Meßgerät in seiner Anwendung beim Ausrichten von Wellen (Fig.1 bis Fig. 10) und in seiner Anwendung beim Vermessen des Höhenprofils einer Fläche (Fig. 11 und 12) beschrieben. Über diese Anwendungen hinaus sind für den Fachmann noch zahlreiche andere Anwendungen denkbar.

Bei der den Fig. 1 bis 8 zugrundeliegenden Anwendung werden zwei durch eine zweiteilige Kupplung 1a, 1b miteinander zu kuppelnde Wellen 2 und 3 hinsichtlich ihres Fluchtungszustandes mit dem Meßgerät vermessen.

Bei allen drei Ausführungen gemäß Fig. 1 bis Fig. 3 weist das Meßgerät mindestens einen Laserstrahlsender 4 auf, der einen gebündelten Laserstrahl L sehr geringer Divergenz in etwa parallel zu der Mittelachse der Welle, an der er befestigt ist, also parallel zur Welle 3, aussendet. Des weiteren weist das Meßgerät bei allen Ausführungen gemäß Fig. 1 bis 3 für jeden Laserstrahl L mindestens einen elektrooptischen Positionsdetektor auf, dessen lichtempfindliche Meßfläche 5 im wesentlichen senkrecht zu dem zu empfangenden Laserstrahl L ausgerichtet ist.

Bei der Ausführung nach Fig. 1 sind zwei elektrooptiche Positionsdetektoren vorgesehen, die zumindest virtuell hintereinander in einem gewissen Abstand angeordnet sind, wobei der Laserstrahl sowohl auf die Meßfläche 5 des einen Detektors als auch auf die Meßfläche 5 des anderen Detektors einfällt.

Zum Feststellen des Fluchtungszustandes werden die beiden Wellen 2 und 3 im Gleichlauf gedreht bzw. - bei stehenden Wellen 2 und 3 - der Laserstrahlsender 1 und die Positionsdetektoren 5 im Gleichlauf koaxial um die Wellen 2, 3 herum gedreht, wobei im Falle eines vorhandenen Parallel- und Winkelversatzes zwischen den Mittelachsen der Wellen 2 und 3 der Auftreffpunkt LA des Laserstrahls L auf der einen bzw anderen Detektor-Meßfläche 5 im Verlaufe dieser Drehbewegung des Meßgeräts auf den beiden Detektorflächen jeweils eine kreisförmige Spur beschreibt.

Bei der Ausführung nach Fig. 2 ist nur ein einziger Laserstrahlsender 4 und ein einziger elektooptischer Positionsdetektor mit Detektorfläche 5 vorhanden, die beide an der Welle 3 befestigt sind, und auf der anderen Welle 2 ist ein rechtwinkliges Dachkant-Spiegelprisma so angebracht, daß seine Hypotenusenebene 6a zum einfallenden Laserstrahl L im wesentlichen senkrecht ist und der einfallende Laserstrahl zu dem Positionsdetektor auf der anderen Welle 3 reflektiert wird. Im Falle eines Parallelversatzes und Winkelversatzes zwischen den Mittelachsen der Wellen 2 und 3 beschreibt hier der Durchstoßpunkt des Laserstrahls durch die die Meßfläche 5 beinhaltende Ebene eine in sich geschlossene Spur, die abhängig von der Größe der beiden Versatzarten eine Ellipse, ein Kreis oder auch - bei genauer Fluchtung - ein Punkt sein kann.

Bei der Ausführung nach Fig. 3 ist auf jeder der beiden hinsichtlich ihres Fluchtungszustandes zu vermessenden Wellen 2 und 3 jeweils ein Lichtstrahlsender 4 und ein Positionsdetektor mit Meßfläche 5 fest angebracht, wobei die Detektorfläche 5 zum Empfang des von dem Laserstrahlsender 4 auf der anderen Welle ausgesendeten Laserstrahls L bestimmt ist.

Die Fig. 4 zeigt als Beispiel eine der Positionsdetektor-Meßflächen 5 in vier unterschiedlichen, einen Winkelabstand von 90° aufweisenden Winkelpositionen, die sie im Verlaufe einer aus einer Drehung der beiden Wellen 2 und 3 um 270° bestehenden Meßbewegung durchläuft, wobei auch die Spur S eingezeichnet ist, die hierbei der Durchstoßpunkt LA des Laserstrahls L durch die die Meßfläche 5 beinhaltende Ebene in dieser Ebene zurücklegt. Dabei ist angenommen, daß die Abweichung vom idealen Fluchtungszustand der beiden Wellen 2 und 3 so groß ist, daß der Laserstrahl-Auftreffpunkt LA aus der Meßfläche 5 herausläuft, wie dies bei der 180°-Stellung und bei der 270°-Stellung zu erkennen ist, wenn an der Einstellung der Meßfläche 5 bezüglich der Welle 3 keine Änderungen vorgenommen werden.

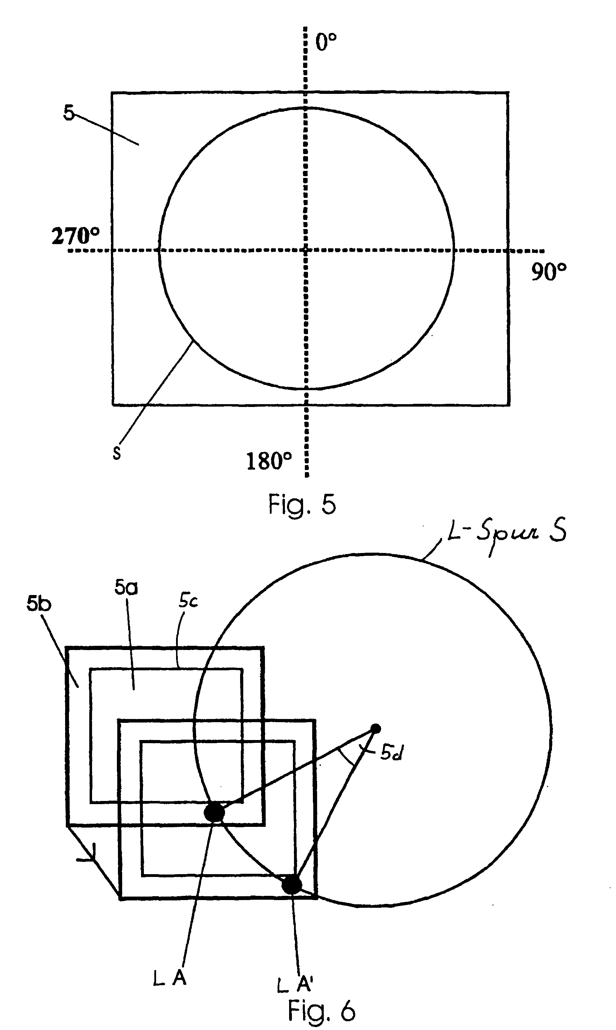

Nur wenn der Winkelversatz und der Parallelversatz eine bestimmte Größe nicht überschreiten, bleibt die Spur S, die der Lichtstrahlauftreffpunkt LA bei unverändert bleibender Relativposition zwischen Welle 3 und Meßfläche 5 in deren Ebene beschreibt, auf die Meßfläche 5 beschränkt, wie dies in Abb. 5 dargestellt ist.

Um bei demgegenüber größeren Fluchtungsfehlern dennoch eine präzise Erfassung der Meßwerte zu gewährleisten, ist gemäß der Erfindung vorgesehen, den Meßbereich des jeweiligen Meßdetektors durch passende Veränderung der relativen Position zwischen Positionsdetektor und Welle im Verlaufe der Meßbewegung jeweils so zu erweitern, daß der Lichtstrahlauftreffpunkt LA über die ganze Meßbewegung hinweg auf der Meßfläche 5 verbleibt, wobei der Beginn und das Ende der Erweiterung ohne Zutun der Bedienungsperson angezeigt werden und dieser für die ggf. händisch vorzunehmende passende Änderung der Relativposition eine Bedienerführung vermittelt werden soll.

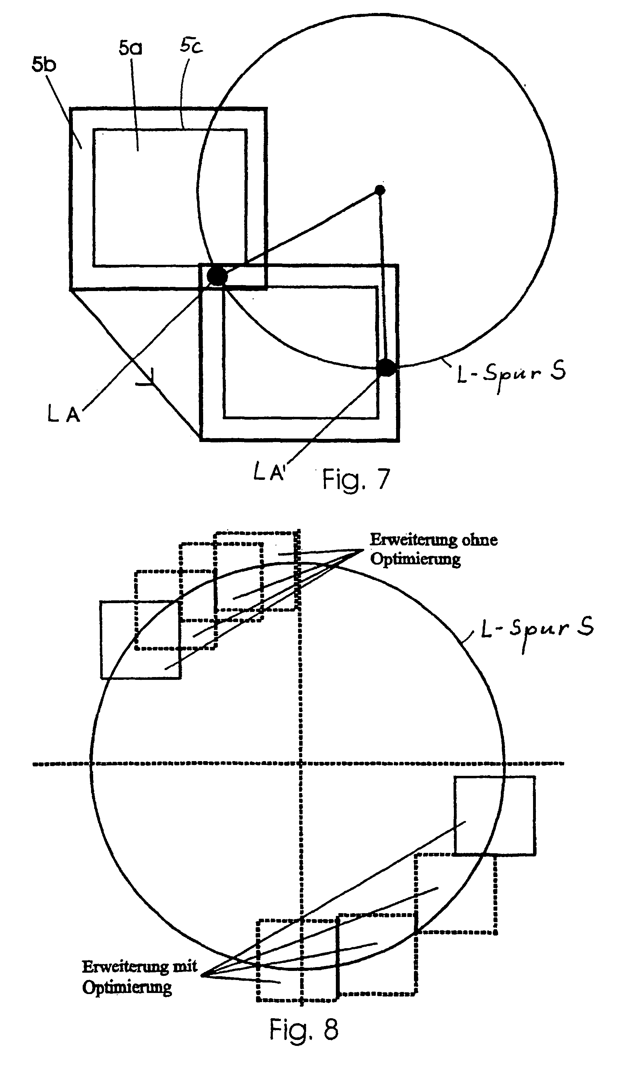

Die Abb. 6 und die Abb. 7 geben das Prinzip einer solchen Erweiterung schematisch wieder, und zwar die Fig. 6 für eine normale Erweiterung, bei der der Positionsdetektor zu Beginn der Erweiterung gegenüber der Welle für den Betrachter der Fig. 6 abwärts und nach rechts so verstellt wird, daß der Lichtstrahlauftreffpunkt LA wieder in die Mitte der Meßfläche 5 zu liegen kommt, und in Fig. 7 für eine optimierte Erweiterung, bei der Positionsdetektor zu Beginn der Erweiterung gegenüber der Welle für den Betrachter der Fig. 7 abwärts und nach rechts so verstellt wird, der Lichtstrahlauftreffpunkt LA zu Beginn der Erweiterung an eine Stelle auf der Meßfläche 5 gelangt, von der ausgehend der Lichtstrahlauftreffpunkt bis zur nächsten nötigen Erweiterung (bei LA') auf der Detektorfläche 5 einen maximal möglichen, im Voraus berechneten Weg zurücklegt.

Aus Fig. 8 ist ersichtlich, daß im Verlaufe der Meßbewegung mit optimierten Erweiterungen gemäß Fig. 7 weniger Positionsveränderungen zwischen Positionsdetektor und Welle vorgenommen werden müssen als bei Vornahme von normalen Erweiterungen gemäß Fig. 6.

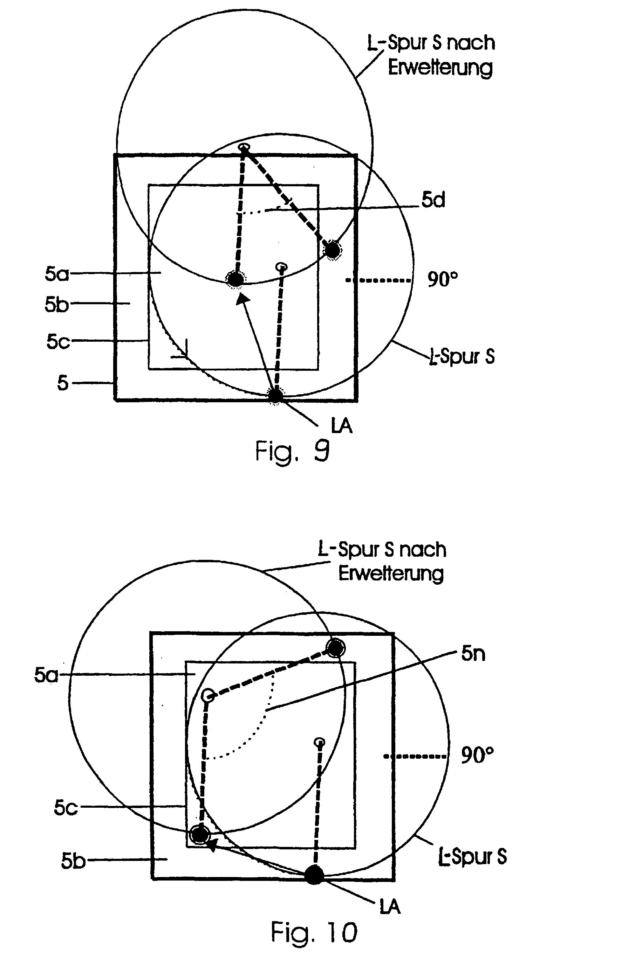

Die in Fig. 9 und 10 dargestellten Ausführungsbeispiele unterscheiden sich von den in Fig. 6 und 7 wiedergegebenen dadurch, daß anstelle einer zu Beginn einer Erweiterung vorzunehmenden Verlagerung des Positionsdetektors 5 bezüglich der Welle 3, zu Beginn einer Erweiterung die Orientierung des Laserstrahls L bezüglich des in seiner Stellung gegenüber der Welle 3 unverändert bleibenden Positionsdetektors 5 so verändert wird, daß die bei den Ausführungsbeispielen nach Fig. 6 und 7 angestrebten Ausgangspositionen der Lichtstrahlauftreffpunkte auf der Meßfläche 5 des Positionsdetektors zu Beginn der Erweiterung erhalten werden.

Auch eine Kombination der Ausführungsbeispiele gemäß Fig. 6 und 7 einerseits mit den Ausführungsbeispielen gemäß Fig. 9 bzw. 10 andererseits ist möglich.

Um den Beginn einer Erweiterung richtig festlegen und das Ende einer Erweiterung, d.h. die Notwendigkeit zur Einleitung einer nächsten Meßbereichserweiterung, richtig erkennen zu können, ist die Detektormeßfläche 5 in zwei z.B. aus der Größe der vom Positionsdetektor ausgegebenen elektrischen Signale erkennbare Bereiche 5a und 5b mit dazwischen liegender Grenze 5c unterteilt, wie dies schematisch in Fig. 6 und 7 dargestellt ist. Sobald der Lichtstrahlauftreffpunkt LA in den äußeren Bereich 5b kommt, wird das als Zeichen dafür gewertet, daß eine neue Meßbereichserweiterung eingeleitet werden muß.

Der Meßaufbau und die physikalisch möglichen Bewegungen des Meßobjektes ergeben eine in ihrer prinzipiellen Form bekannte mathematische Funktion F, die von mehreren Variablen abhängt, die zum Teil von räumlichen Abmessungen des Gerätes und der zu vermessenden Körper in Bezug aufeinander abhängen und zum Teil durch die von dem Detektor gelieferten elektrischen Signale charakterisiert sind. Damit ist vorgegeben, daß eine Änderung der Parameter stets gemeinsam so erfolgen muß, daß diese Funktion erfüllt werden kann. Das erfindungsgemäße Prinzip der automatischen Meßbereichserweiterung beruht darauf, daß eine festgestellte Abweichung von Koordinaten von der gemeinsamen Funktion F nicht durch die Abtastung des Meßobjektes oder die Bewegung des Meßobjektes erfolgt sein kann, sondern vielmehr durch eine Änderung der Lage des Meßgeräts oder von Teilen desselben bezüglich der zu vermessenden Körper, also durch eine Bereichserweiterung, bedingt sein muß, und das Meßgerät mit seiner eingebauten Programmsteuerung ist in der Lage, zwischen solchen Abweichungen der Koordinaten von der gemeinsamen Funktion F und meßsystematischen Änderungen innerhalb der Funktion F zu unterscheiden.

Die Durchstoßpunkte des Laserstrahls durch die die Meßebene 5 des Positionsdetektors beinhaltende Ebene beschreiben in dieser Ebene während einer Meßbewegung, d.h. einer Drehung der Wellen um einen vorbestimmten Winkelbereich, eine einer Ellipse folgende Bahn, die durch die Form der mathematischen Funktion bestimmt wird, die durch die Anordnung des Meßaufbaus und die mögliche Bewegung der Wellen bei der Meßbewegung entstehen muß. Für die automatische Erkennung, ob eine Verlagerung des Lichtstrahlauftreffpunktes auf den Meßvorgang als solchen oder auf eine Änderung der Position des Meßaufbaus bezüglich des Meßobjektes zurückzuführen ist, stehen die Koordinaten des Detektors sowie der Drehwinkel des gesamten Meßaufbaus zur Verfügung. Die Positionskoordinaten des Detektors können sich nur dann aufgrund einer Messung ändern, wenn sich die Koordinaten des Lichtstrahlauftreffpunktes LA auf der Detektorfläche und der Drehwinkel der Detektorfläche innerhalb der vorbestimmten Funktion F bleiben. Ansonstenhandelt es sich um eine Meßbereichserweiterung.

Die Arbeitsweise des erfindungsgemäßen Meßgerätes beruht nun darauf, daß eine Aufnahme neuer, für die Berechnung des gegenseitigen Versatzes der Mittelachsen der Wellen 2 und 3 relevanter Meßpunkte mit der Änderung des Drehwinkel einhergehen muß, während auf Änderungen der von dem Detektor abgegebenen elektrischen Signale ohne gleichzeitige Änderung des gemessenen Drehwinkels die Aussage zutrifft, daß an der Lage des Meßaufbaus oder von Teilen von diesem bezüglich des Meßobjekts Veränderungen vorgenommen werden, also eine Erweiterung durchgeführt wird. Diese Bedingung wird bei dem erfindungsgemäßen Meßgerät genutzt, um den Start einer Erweiterung zu erkennen. Die vollzogene Erweiterung wird automatisch daran erkannt, daß weitere Änderungen der von dem Positionsdetektor ausgegebenen Signale wieder zusammen mit Änderungen des gemessenen Drehwinkels einhergehen. Dies ist bei dem erfindungsgemäßen Meßgerät die Wiederaufnahmebedingung der Messung.

Nach der Wiederaufnahme der Messung werden so lange Meßpunkte aufgenommen, bis der Auftreffpunkt LA des Laserstrahls aus der inneren Zone 5a der Meßfläche 5 des Positionsdetektors herausläuft und somit für die Fortsetzung der Messung eine Meßbereichserweiterung stattfinden muß. Aus den bis dahin gesammelten Punkten wird die Form der z.B. elliptischen Bahn des Laserdurchstoßpunktes durch die die Meßfläche 5 des Positionsdetektors beinhaltende Ebene bestimmt. Dazu reichen für eine mehr oder minder grobe Vorausbestimmung im allgemeinen nur wenige Punkte, und zwar gerade so viele, wie das jeweilige Gleichungssystem der Ellipse benötigt. Die daraus bestimmbare Ellipse stimmt schon recht genau mit der späteren tatsächlichen Bewegungsbahn überein. Es sind Meßverfahren bekannt, die es mit einer Meßbewegung über einen nur verhältnismäßig geringen Drehbereich ermöglichen, Fluchtungsfehler zwischen den Wellen mit sehr guter Genauigkeit zu ermitteln.

Ist die Bahn des Lasers auf dem Detektor bestimmt, so geht man daran, den Meßaufbau gegenüber dem momentanen Laserauftreffpunkt in der Art zu bestimmen, daß der weitere Bahnverlauf möglichst maximal auf der zur Verfügung stehenden Detektorfläche wird.

Die Fig. 4 zeigt den bekannten Fall, daß eine Meßbewegung über 270° durchgeführt wird und dabei in Winkelpositionen, die einen gegenseitigen Winkelabstand von 90° aufweisen, Meßsignale vom Positionsdetektor ausgegeben werden, die dann vom Meßgerät programmgesteuert zur Feststellung der Fluchtungsfehler ausgewertet werden. Bei Fig. 4 ist angenommen, daß der momentane FluchtungsFehler der Wellen 2 und 3 in Bezug aufeinander so groß ist, daß in der Ebene der Meßfläche 5 eine eliptische Bahn entsteht, deren Radius größer ist als die halbe Seitenlänge des Detektors. Ohne Meßbereichserweiterung können in einem solchen Falle nur über einen relativ kleinen Drehwinkel der Wellen 2 und 3 Meßpunkte erfaßt werden. Um in vier Meßpositionen, die einen gegenseitigen Winkelabstand von 90° aufweisen, genaue Messungen vornehmen zu können oder auch um einen möglichst großen Winkelbereich für Messungen zur Verfügung zu haben, in dem eine eindeutige Messung möglich ist, muß in einem solchen Falle eine Bereichserweiterung eingeleitet werden. Die Fig. 6 zeigt das Vorgehen bei einer einfachen Bereichserweiterung, bei der die Position der Detektorfläche bezüglich des Laserstrahls für den Beginn der Bereichserweiterung so verändert wird, daß der Laserstrahl wieder in der Mitte auf die Meßfläche 5 auftrifft. Bei dieser Positionsänderung zieht der Auftreffpunkt LA des Laserstrahls L auf dem Detektor eine Bahn, so daß der Detektor auch sich entsprechend ändernde elektrische Signale liefert. Diese Signaländerung geht aber mit keiner Änderung der Meßbewegung einher, die überwacht wird. Werden nun erneut die Wellen 2 und 3 weitergedreht, um die Messung fortzusetzen, so kann es geschehen, daß der Lichtstrahlauftreffpunkt wieder in den äußeren Bereich 5b der Detektor-Meßfläche gelangt. Dabei zieht der Laserstrahlauftreffpunkt LA auf der Meßfläche 5a eine kreisbogenförmige Spur über einen relativ kleinen Winkel 5d, der etwa 40° beträgt, wonach die neue Bereichserweiterung durchzuführen ist.

Die Abbildung 7 zeigt eine Bereichserweiterung mit Optimierung. Auch hier ist zu Beginn der Einleitung der Bereichserweiterung der Lichtstrahlauftreffpunkt LA in den äußeren Meßflächenbereich 5b gekommen. Nun wird für die optimierte Erweiterung aber zunächst die Bahn berechnet, die der Durchstoßpunkt des Lasers durch die die Meßfläche beinhaltende Ebene im Verlaufe der weiteren Meßbewegung zurücklegen wird. Im Beispiel hat die Bahn ein nächstes Maximum in 90°-Richtung und der Wert ist etwas kleiner als die Seitenlänge des Detektors. Der Punkt muß also um den Betrag der Differenz zwischen dem momentanen Wert und dem Maximum von der Außenkante des inneren Bereichs bei 90° nach innen verschoben werden, d.h. in Abbildung 7 nach links. Für die 0°-Richtung ergibt sich ein Maximum nach einer Strecke, die größer ist als die Seitenlänge des inneren Bereichs 5a in dieser Richtung. Daraus folgt, daß der Laserauftreffpunkt LA an das untere Ende, also in 180°-Richtung, an den Rand des inneren Bereichs 5a der Meßfläche 5 gelegt werden muß, damit der Laserauftreffpunkt LA im Verlaufe der weiteren Meßbewegung eine optimal lange Strecke auf der Meßfläche 5 verbleibt.

Die Meßbereichserweiterungen können unter Bedienerführung auf einem dem Meßgerät beigegebenen Display vom Anwender händisch vorgenommen werden, indem er entweder den Positionsdetektor verschiebt oder indem er die Erstreckung des Laserstrahls bezüglich des Meßobjekts verändert. In beiden Fällen werden die sich in den Meßsignalen äußernden und ohne Fortführung der Meßbewegung stattfindenden Koordinatenänderungen gespeichert und bei weiteren Punkten in die programmgesteuert vom Gerät durchgeführte Berechnung einbezogen.

Dem Anwender kann bei der Veränderung der Position der Meßfläche bezüglich des Meßobjekts zwecks Einstellung der neuen optimalen Position des Laserauftreffpunktes LA auf der Meßfläche 5 durch optische oder akustische Mittel geholfen werden. Optisch können ihm z. B. die neuen Zielkoordinaten auf dem Display angezeigt werden, die er anzupeilen hat, oder es wird der neue Punkt zu 0,0 definiert, woraufhin dann der Anwender 0,0 anzupeilen hat. Dies ist auch durch die Darstellung eines Zielkreuzes mit Auftreffpunkt auf der Displayfläche zu erreichen. Eine andere Möglichkeit besteht darin, die Nähe zu dem optimalen Punkt anzuzeigen, z.B. als Balken oder Pfeil, der größer oder kleiner wird. Ebenso ist eine farbliche Änderung eines Bildelements im Display als Funktion der Nähe des Zielpunktes möglich.

Akustisch kann die Frequenz oder die Lautstärke eines Signals oder die Form einer Impulsfolge an die Nähe des Zielpunktes geknüpft sein. Auch eine Sprachausgabe ist denkbar.

Das vorstehend geschilderte Meßprinzip eignet sich z. B. auch für das Vermessen von Einzelpunkten auf der Oberfläche MO eines Körpers, also für die Erstellung eines Höhenprofils. Hierauf treffen grundsätzlich die gleichen Aussagen zu, die hinsichtlich der Bereichserweiterung in Verbindung mit den vorstehend geschilderten Ausführungsbeispielen der Wellenvermessung dargelegt wurden.

Der Laserstrahlsenden 1' gemäß Fig. 11 und 12 wird statisch montiert und sendet einen Lichtstrahl L' über das Meßobjekt, die Oberfläche MO des Körpers. Der den Laserstrahl L' empfangende Teil des Meßgeräts wird mit seinem Fuß F auf die zu vermessenden Punkte gestellt, und die Koordinaten des Detektors werden aufgezeichnet (Fig. 11).

Hat man den den Laserstrahl L' empfangenden Teil mit seiner Meßfläche 5' installiert, so kann es nur dann zu einer Änderung der für die zu messende Höhe maßgeblichen Meßgröße kommen, wenn sich gleichzeitig die Koordinaten X und Y der Meßposition des die meßfläche 5' beinhaltenden Detektors ändern.

Da die Meßgeräte der aus Fig. 11 und Fig. 12 ersichtlichen Art die Meßgrößen X und Y nicht erfassen können, wohl jedoch die zu bestimmende Höhe Z des Laserstrahlauftreffpunktes LA' auf der Detektormeßfläche 5', kann gesagt werden: Werden vom Benutzer keine neuen X- und Y-Koordinaten eingegeben, ändert sich aber die Z-Koordinate auf der Detektormeßfläche 5', dann findet eine Aktion am Meßaufbau statt. Es ist eine Erweiterung eingeleitet. Der Vollzug dieser Erweiterung wird nun erkannt, wenn neue X, Y-Positionskoordinaten vom Anwender eingegeben werden. Auf diese Art ist die Meßbereichserweiterung durchgeführt worden, ohne daß der Benutzer zu einem expliziten Start- oder Stopp-Kommando am Meßsystem gezwungen worden wäre.

Als Meßgrößen, die in diesem Fall die Änderung des Meßaufbaus erkennen lassen, zählen hier die Positionskoordinaten X und Y. Bleiben diese während einer Änderung der Höhenkoordinaten Z konstant, so kann von einer Meßbereichserweiterung ausgegangen werden (Fig. 11 und 12).

Beim Ausführungsbeispiel gemäß Fig. 11 und 12 wird die Erweiterung dadurch vorgenommen, daß der Winkel, unter dem der Laserstrahl L' vom Sender 1' ausgesendet wird, verändert wird. Prinzipiell wäre es natürlich auch möglich, die Länge des die Meßfläche 5' abstützenden Fußes F zu verändern.

## Patentansprüche

1. Elektrooptisches Meßgerät zum Feststellen der Relativlage, die zwei Körper (2,3) oder Oberflächenbereiche von Körpern (MO) in Bezug aufeinander einnehmen, mit einer Meßanordnung mit mindestens einem Lichtstrahlsender (1,1',4) und mindestens einem ein- oder mehrachsigen optoelektronischen Positionsdetektor mit lichtempfindlicher Meßfläche (5, 5'), wobei
a) der Lichtstrahlsender (1,1',4) einen gebündelten Lichtstrahl geringer Divergenz, insbesondere einen Laserstrahl (L, L'), in bezüglich des einen Körpers (3) bzw. Oberflächenbereichs des Körpers (MO) fester Erstreckung direkt oder über eine zur Meßanordnung gehörende Spiegelanordnung (6) auf die lichtempfindliche Meßfläche (5, 5') des Positionsdetektors richtet und dieser den Koordinaten (x, y) des augenblicklichen Lichtstrahlauftreffpunktes (LA) auf der Meßfläche (5, 5') entsprechende elektrische Signale liefert, und
b) die Meßanordnung oder Teile von dieser so gestaltet ist/sind, daß sie in einer definierten Meßbewegung mit dem oder an dem einen und/oder anderen Körper (3) bzw. Oberflächenbereich des Körpers (MO) derart verlagerbar ist/sind, daß der sich im Verlaufe der Meßbewegung ergebende geometrische Ort (S) der Lichtstrahlauftreffpunkte (LA) auf der Meßfläche (5,5') in einer vorbestimmten Beziehung zu der festzustellenden Relativlage der Körper (2,3) bzw. Oberflächenbereiche steht, so daß das Meßgerät auf der Grundlage der unter der Meßbewegung vom Positionsdetektor gelieferten elektrischen Signale programmgesteuert die festzustellende Relativlage errechnen kann,
**gekennzeichnet durch** eine Einrichtung, die unter Überwachung der Meßbewegung eine Meßbereichserweiterung durchführt, wobei eine Programmsteuerung vorhanden ist, welche so eingerichtet ist, daß das Meßgerät Änderungen der Lage des Lichtstrahlauftreffpunktes (LA) auf der Meßfläche (5, 5'), die ohne gleichzeitige Meßbewegung stattfinden, automatisch nicht als für die festzustellende Relativlage relevante Meßsignale sondern als **durch** eine zur Meßbereichserweiterung vorgenommene Verlagerung des Lichtstrahls (L, L') bezüglich der Meßfläche (5, 5') des Positionsdetektors bedingt behandelt.

2. Meßgerät nach Anspruch 1, **gekennzeichnet durch** eine Einrichtung zum Erzeugen eines für den Bediener wahrnehmbaren Warnsignals, wenn sich der Lichtstrahlauftreffpunkt (LA) im Verlaufe der Meßbewegung dem Rand des Meßbereichs bis auf ein vorbestimmtes Maß (5c) genähert hat.

3. Meßgerät nach einem der Ansprüche 1 oder 2 zur Feststellung des Fluchtungszustandes zweier im wesentlichen koaxial hintereiander angeordneter Wellen (2, 3), bei dem die Meßbewegung darin besteht, daß die Wellen (2, 3) entweder mit der auf sie aufgesetzten Meßanordnung synchron um ihre Achsen gedreht werden oder die auf sie verteilten Teile (4, 5, 6) der Meßanordnung synchron um die stehenden Wellen (2, 3) herum koaxial zu deren Mittelachse verschwenkt werden, **gekennzeichnet durch** eine Einrichtung, die anzeigt, zu welchem Ausgangspunkt auf der Meßfläche (5) der Lichtstrahlauftreffpunkt (LA) **durch** Ändern der gegenseitigen Lage von Lichtstrahl (L) und Detektor-Meßfläche (5) für den folgenden Meßbereich bewegt werden soll, sobald der Lichtstrahlauftreffpunkt (LA) im vorhergehenden Meßbereich eine noch zulässige Endposition an der Grenze der Meßfläche (5) erreicht hat und bei Fortsetzung der Meßbewegung aus der Meßfläche (5) herauslaufen würde.

4. Meßgerät nach Anspruch 3, **dadurch gekennzeichnet, daß** der Ausgangspunkt so berechnet wird, daß für den im folgenden Meßbereich zu erwartenden geometrischen Ort (S) der Lichtstrahlauftreffpunkte (LA) eine optimale Länge auf der Meßfläche (5) verfügbar ist.

5. Meßgerät nach Anspruch 3 oder 4, **dadurch gekennzeichnet, daß** die Programmsteuerung so gestaltet ist, daß der sich bei einer Drehung der Wellen (2, 3) um 360° ergebende geometrische Ort der Lichtstrahlauftreffpunkte (LA) angenähert aus dem sich bei einer Drehung der Wellen (2, 3) über einen wesentlich geringeren Drehwinkel ergebenden geometrischen Ort (S) der Lichtstrahlauftreffpunkte (LA) errechnet werden kann.

6. Meßgerät nach einem der Ansprüche 1 oder 2 zur Vermessung der Oberfläche eines Körpers (OM), wobei der Lichtstrahlsender (1') einen sich als Referenzstrahl über die Oberfläche erstreckenden Lichtstrahl (L') auszuzenden gestattet und der Positionsdetektor mit seiner Meßfläche (5) zur Messung des Abstandes von Punkten der Oberfläche von dem Referenzstrahl an einem entlang der Oberfläche versetzbaren Tastglied befestigt ist, **dadurch gekennzeichnet, daß** eine Einrichtung vorgesehen ist, die erkennt, ob vor jeder Abstandsmessung für einen Meßpunkt auf der Oberfläche die Ortskoordinaten dieses Meßpunktes bezüglich eines ortsfesten Bezugspunktes in das Meßgerät eingegeben wurden, und daß Änderungen der Lage des Lichtstrahlauftreffpunktes (LA) auf der Meßfläche (5') vom Meßgerät automatisch als Bereichserweiterung behandelt werden, wenn diese Änderung nicht von einer vorhergehenden Eingabe von Ortskoordinaten begleitet ist.

## Claims

1. Electrooptical measuring instrument for detecting the relative position assumed by two bodies (2, 3) or surface regions of bodies (MO) with respect to one another, having a measuring arrangement which has at least one light beam transmitter (1, 1',4) and at least one single-axis or multi-axis optoelectronic position detector with a light-sensitive measuring surface (5, 5'), in which
a) in a path fixed with respect to one body (3) or surface region of the body (MO) the light beam transmitter (1, 1',4) directs a focused light beam of small divergence, in particular a laser beam (L, L'), directly or via a mirror arrangement (6) belonging to the measuring arrangement onto the light-sensitive measuring surface (5, 5') of the position detector, and the latter supplies electric signals corresponding to the coordinates (x, y) of the instantaneous point of impingement (LA) of the light beam on the measuring surface (5, 5'), and
b) the measuring arrangement or parts of the latter is/are configured such that it/they can be displaced in a defined measuring movement with the or on the one and/or other body (3) or surface region of the body (MO) in such a way that the geometrical locus (S), produced in the course of the measuring movement, of the points of impingement (LA) of the light beam on the measuring surface (5, 5') is in a predetermined relationship to the relative position of the bodies or surface regions to be determined, with the result that on the basis of the electric signals as supplied by the position detector during the measuring movement, the measuring instrument can calculate under programmed control the relative position to be detected,
**characterized by** a device which carries out an extension of the measuring region while monitoring the measuring movement, in which a program controller is present which is set up such that the measuring instrument automatically treats changes in the position of the point of impingement (LA) of the light beam on the measuring surface (5, 5'), which take place without simultaneous measuring movement, not as measuring signals relevant to the relative position to be detected, but as a displacement, undertaken to extend the measuring region, of the light beam (L, L') with respect to the measuring surface (5, 5') of the position detector.

2. Measuring instrument according to Claim 1, **characterized by** a device for generating a warning signal perceptible to the user when in the course of the measuring movement the point of impingement (LA) of the light beam has approached the edge of the measuring region up to a predetermined measure (5c).

3. Measuring instrument according to either of Claims 1 and 2 for detecting the state of alignment of two shafts (2, 3) arranged one behind another in an essentially coaxial fashion, in which the measuring movement consists in that either the shafts (2, 3) are rotated about their axes synchronously with the measuring arrangement mounted on them, or the parts (4, 5, 6), distributed on them, of the measuring arrangement are pivoted synchronously about the stationary shafts (2, 3) in a fashion coaxial with their central axis, **characterized by** a device which indicates at which starting point on the measuring surface (5) the point of impingement (LA) of the light beam is to be moved by changing the mutual position of the light beam (L) and detector measuring surface (5) for the following measuring region as soon as the point of impingement (LA) of the light beam in the preceding measuring region has reached a still permissible end position at the boundary of the measuring surface (5) and would run out of the measuring surface (5) in the event of continuation of the measuring movement.

4. Measuring instrument according to Claim 3, **characterized in that** the starting point is calculated such that an optimum length is available on the measuring surface (5) for the geometrical locus (S), to be expected in the following measuring region, of the points of impingement (LA) of the light beam.

5. Measuring instrument according to Claim 3 or 4, **characterized in that** the program controller is configured such that the geometrical locus, produced during a rotation of the shafts (2, 3) by 360°, of the points of impingement (LA) of the light beam can be calculated approximately from the geometrical locus (S), produced during a substantially smaller angle of rotation, of the points of impingement (LA) of the light beam.

6. Measuring instrument according to either of Claims 1 and 2 for measuring the surface of a body (MO), the light beam transmitter (1') allowing a light beam (L' ) extending as a reference beam on the surface to be transmitted, and the position detector with its measuring surface (5) being fastened, for the purpose of measuring the distance of points on the surface from the reference beam, to a sensing element which can be displaced along the surface, **characterized in that** a device is provided which detects whether before each distance measured for a measuring point on the surface the spatial coordinates of this measuring point with respect to a spatially fixed reference point have been input into the measuring instrument, and **in that** changes in the position of the point of impingement (LA) of the light beam on the measuring surface (5') are automatically treated by the measuring instrument as an extension of the measuring region when this change is not accompanied by a preceding input of spatial coordinates.

## Revendications

1. Appareil de mesure électro-optique servant à déterminer la position relative que deux corps (2, 3) ou surfaces de corps (MO) prennent l'un par rapport à l'autre, comportant un dispositif de mesure comprenant au moins un émetteur de rayons lumineux (1, 1', 4) et au-moins un détecteur de position optoélectronique à un ou plusieurs axes à surface de mesure sensible à la lumière (5, 5'),
a) l'émetteur de rayons lumineux (1, 1', 4) dirigeant un rayon lumineux en faisceau à faible divergence, notamment un rayon laser (L, L') dans une extension fixe par rapport à un corps (3) ou à une surface du corps (MO) directement ou par l'intermédiaire d'un système de miroirs (6) faisant partie du dispositif de mesure sur la surface de mesure sensible à la lumière (5, 5') du détecteur de position et celui-ci transmettant aux coordonnées (x, y) du point d'impact du rayon lumineux momentané (LA), sur la surface de mesure (5, 5'), des signaux électriques correspondants, et
b) le dispositif de mesure ou des pièces de celui-ci étant configuré(es) de manière à ce qu'il (elles) soi(en)t déplaçable(s) dans un mouvement de mesure défini avec ou sur l'un et/ou l'autre corps (3) ou surface du corps (MO) de sorte que l'emplacement géométrique (S) des points d'impact du rayon lumineux (LA) apparaissant au cours du mouvement de mesure soit sur la surface de mesure (5, 5') en relation prédéfinie avec la position relative à déterminer des corps (2, 3) ou des surfaces, de manière à ce que l'appareil de mesure puisse, sur la base des signaux électriques transmis pendant le mouvement de mesure par le détecteur de position, calculer par commande programmée la position relative à déterminer,
**caractérisé par** un dispositif qui réalise un agrandissement de la zone de mesure en surveillant le mouvement de mesure,
une commande programmée étant disponible, laquelle commande étant conçue de manière à ce que l'appareil de mesure traite automatiquement des modifications de la position du point d'impact du rayon lumineux (LA) sur la surface de mesure (5, 5') qui ont lieu sans mouvement de mesure simultané non pas comme des signaux de mesure significatifs pour la position relative à déterminer, mais comme un décalage réalisé pour l'agrandissement de la zone de mesure du rayon lumineux (L, L') par rapport à la surface de mesure (5, 5') du détecteur de position.

2. Appareil de mesure selon la revendication 1, **caractérisé par** un dispositif de génération d'un signal d'alarme perceptible par l'utilisateur lorsque le point d'impact du rayon lumineux (LA) s'est approché du bord de la zone de mesure jusqu'à un certain point (5c) au cours du mouvement de mesure.

3. Appareil de mesure selon l'une quelconque des revendications 1 ou 2 servant à déterminer l'état d'alignement de deux arbres (2, 3) disposés coaxialement substantiellement l'un derrière l'autre, dans lequel le mouvement de mesure consiste en ce que les arbres (2, 3) sont soit tournés de manière synchrone autour de leurs axes avec le dispositif de mesure posé sur eux, soit les pièces réparties sur eux (4, 5, 6) du dispositif de mesure sont tournées de manière synchrone autour des arbres dressés (2, 3) coaxialement par rapport à leur axe central, **caractérisé par** un dispositif qui indique à quel point de départ le point d'impact du rayon lumineux (LA) doit être déplacé sur la surface de mesure (5) en modifiant la position réciproque du rayon lumineux (L) et de la surface de mesure du détecteur (5) pour la zone de mesure suivante, dès que le point d'impact du rayon lumineux (LA) a atteint dans la zone de mesure précédente une position finale encore admissible à la frontière de la surface de mesure (5) et s'échapperait de la surface de mesure (5) en cas de continuation du mouvement de mesure.

4. Appareil de mesure selon la revendication 3, **caractérisé en ce que** le point de départ est calculé de manière à ce qu'une longueur optimale soit disponible sur la surface de mesure (5) pour l'emplacement géométrique (S) à attendre dans la zone de mesure suivante des points d'impact du rayon lumineux (LA).

5. Appareil de mesure selon la revendication 3 ou 4, **caractérisé en ce que** la commande programmée est conçue de manière à ce que l'emplacement géométrique des points d'impact du rayon lumineux (LA) obtenu lors d'une rotation des arbres (2, 3) de 360° peut être calculé approximativement à partir de l'emplacement géométrique (S) des points d'impact du rayon lumineux (LA) obtenu lors d'une rotation des arbres (2, 3) dans un angle de rotation substantiellement plus faible.

6. Appareil de mesure selon l'une quelconque des revendications 1 ou 2 servant à mesurer la surface d'un corps (OM), l'émetteur de rayons lumineux. (1') permettant l'envoi d'un rayon lumineux (L') s'étendant en tant que rayon de référence sur la surface et le détecteur de position avec sa surface de mesure (5) servant à mesurer la distance entre des points de la- surface et le rayon de référence étant fixé sur un élément de détection pouvant être décalé le long de la surface, **caractérisé en ce qu'**il est prévu un dispositif qui détecte si, avant toute mesure de distance, pour un point de mesure en surface, les coordonnées de lieu de ce point de mesure par rapport à un point de référence à emplacement fixe ont été saisies dans l'appareil de mesure, et que des modifications de position du point d'impact du rayon lumineux (LA) sur la surface de mesure (5') sont traitées automatiquement par l'appareil de mesure comme un agrandissement de la zone si cette modification n'est pas accompagnée d'une saisie préalable de coordonnées de lieu.
